# EUROPEAN PATENT APPLICATION

(11) **EP 4 797 767 A1**
(43) Date of publication of application: **26.08.2026**
(21) Application number: 23955760.6
(22) Date of filing: 19.10.2023
(51) Int. Cl.: H04W 24/02

(54) **BEAM SENDING METHOD, INFORMATION SENDING METHOD, SENSING APPARATUS AND SENSING SYSTEM**

(71) Applicant: Beijing Xiaomi Mobile Software Co., Ltd., Beijing 100085 (CN)
(72) Inventor: ZHAO, Qun, Beijing 100085 (CN)
(74) Representative: Dehns Germany Partnerschaft mbB
(86) International application number: PCT/CN2023/125499
(87) International publication number: WO 2025/081434

(57) **Abstract**

The present disclosure relates to a beam sending method, an information sending method, a sensing apparatus and a sensing system. The beam sending method comprises: receiving first information, wherein the first information indicates the granularity of sensing; and on the basis of the first information, sending a sensing reference signal by means of beamforming. In the embodiments of the present disclosure, on the basis of first information, a sensing reference signal is sent by means of beamforming, and therefore, on the basis of the granularity of sensing indicated by the first information, a corresponding wide beam or narrow beam can be used to send the sensing reference signal, so that the granularity and precision of sensing can be flexibly and dynamically adjusted, thereby helping to quickly complete the construction of a sensing map and/or the construction of a high-precision sensing map.

## Description

### TECHNICAL FIELD

The present disclosure relates to the field of communication technology, and in particular to a beam transmission method, an information transmission method, a sensing apparatus, and a sensing system.

### BACKGROUND

In wireless sensing, it is typically necessary to estimate the distance, azimuth angle, and velocity of the target. To achieve wireless sensing, a reference signal is usually transmitted for sensing, which may be achieved via beamforming to transmit the reference signal and sense the target within the beam's coverage area.

### SUMMARY

Embodiments of the present disclosure provide a beam transmission method, an information transmission method, a sensing apparatus, and a sensing system.

According to a first aspect of embodiments of the present disclosure, a beam transmission method is provided. The method includes: receiving first information, where the first information indicates the granularity of sensing; and transmitting a sensing reference signal based on the first information via beamforming.

According to a second aspect of embodiments of the present disclosure, an information transmission method is provided, which is executed by a core network element. The method includes: transmitting first information, where the first information indicates the granularity of sensing.

According to a third aspect of embodiments of the present disclosure, a beam transmission method is provided. The method includes: transmitting, by a core network element, first information to an electronic device where a transmitter is located, where the first information indicates the granularity of sensing; and transmitting, by the electronic device where the transmitter is located, a sensing reference signal based on the first information via beamforming.

According to a fourth aspect of embodiments of the present disclosure, a sensing apparatus is provided, including a transceiving module, configured to: receive first information, where the first information indicates the granularity of sensing; and transmit a sensing reference signal based on the first information via beamforming.

According to a fifth aspect of embodiments of the present disclosure, a network device is provided, including: a transceiving module configured to transmit first information, where the first information indicates the granularity of sensing.

According to a sixth aspect of embodiments of the present disclosure, a sensing device is provided, including: one or more processors. The sensing device is configured to perform the beam transmission method described in the first aspect of embodiments of the present disclosure.

According to a seventh aspect of embodiments of the present disclosure, a network device is provided, including: one or more processors. The network device is configured to perform the information transmission method described in the second aspect of embodiments of the present disclosure.

According to an eighth aspect of embodiments of the present disclosure, a sensing system is provided, including a transmitter and a receiver. The transmitter is configured to implement the beam transmission method described in the first aspect of embodiments of the present disclosure.

According to a ninth aspect of embodiments of the present disclosure, a storage medium is provided. The storage medium has instructions stored thereon. When the instructions are executed on a communication device, the communication device is caused to perform the beam transmission method described in the first aspect of embodiments of the present disclosure, or perform the information transmission method described in the second aspect of embodiments of the present disclosure.

The embodiments of the present disclosure transmit the sensing reference signal via beamforming based on the first information. Therefore, the sensing reference signal can be transmitted using the corresponding wide or narrow beam according to the granularity of sensing indicated by the first information. This allows for flexible and dynamic adjustment of the granularity of sensing and accuracy, which is beneficial for quickly completing the construction of a sensing map and/or the construction of a high-precision sensing map.

### BRIEF DESCRIPTION OF THE DRAWINGS

To more clearly illustrate the technical solutions in the embodiments of the present disclosure, the accompanying drawings required for describing the embodiments are introduced below. These drawings are merely some embodiments of the present disclosure and do not impose specific limitations on the scope of protection of the present disclosure.
Fig. 1 is an example schematic diagram of a beam squint provided according to an embodiment of the present disclosure.
Fig. 2 is an example schematic diagram of the architecture of a sensing system provided according to an embodiment of the present disclosure.
Fig. 3 is an example interactive schematic diagram of a beam transmission method provided according to an embodiment of the present disclosure.
Fig. 4A is an example flowchart of a beam transmission method provided according to an embodiment of the present disclosure.
Fig. 4B is an example flowchart of a beam transmission method provided according to an embodiment of the present disclosure.
Fig. 4C is an example flowchart of a beam transmission method provided according to an embodiment of the present disclosure.
Fig. 4D is an example flowchart of a beam transmission method provided according to an embodiment of the present disclosure.
Fig. 5 is an example flowchart of an information transmission method provided according to an embodiment of the present disclosure.
Fig. 6 is an example flowchart of an information transmission method provided according to an embodiment of the present disclosure.
Fig. 7A is an example schematic diagram of the structure of a sensing apparatus provided according to an embodiment of the present disclosure.
Fig. 7B is an example schematic diagram of the structure of a network device provided according to an embodiment of the present disclosure.
Fig. 8A is an example schematic diagram of the structure of a communication device provided according to an embodiment of the present disclosure.
Fig. 8B is an example schematic diagram of the structure of a chip provided according to an embodiment of the present disclosure.

### DETAILED DESCRIPTION OF THE EMBODIMENTS

The embodiments of the present disclosure present a beam transmission method, an information transmission method, a sensing apparatus, and a sensing system.

In a first aspect, the embodiments of the present disclosure provide a beam transmission method, including: receiving first information, where the first information indicates the granularity of sensing; and transmitting a sensing reference signal based on the first information via beamforming.

In the above embodiments, the sensing reference signal is transmitted via beamforming based on the first information. Therefore, the sensing reference signal can be transmitted using a corresponding wide or narrow beam according to the granularity of sensing indicated by the first information. This allows for flexible and dynamic adjustment of the granularity and accuracy of sensing, which is beneficial for quickly constructing a sensing map and/or constructing a high-precision sensing map.

In conjunction with some embodiments of the first aspect, in some embodiments, transmitting the sensing reference signal based on the first information via beamforming includes: performing beam phase compensation processing on the sensing reference signal port with the first information indicating the first granularity of sensing; and transmitting the sensing reference signal via beamforming.

In the above embodiments, if the first information indicates the first granularity of sensing, such as fine granularity, beam phase compensation processing may be performed on the sensing reference signal port. The beam phase compensation processing can compensate for and overcome beam squint, thereby transmitting the sensing reference signal by using a narrow beam, and achieving high-precision sensing of the refined granularity. For example, for the sensing target with a small cross-sectional area or requiring further sensing, beam phase compensation processing is performed on the sensing reference signal port based on the first information, thereby using the processed narrow beam for high-precision sensing of the refined granularity. Each port for the sensing reference signal may be referred to as a sensing reference signal port.

In conjunction with some embodiments of the first aspect, in some embodiments, transmitting the sensing reference signal based on the first information via beamforming includes: performing no beam phase compensation processing on the sensing reference signal port with the first information indicating a second granularity of perception; and transmitting the sensing reference signal via beamforming.

In the above embodiments, if the first information indicates the second granularity of sensing, such as coarse granularity, then beam phase compensation processing may be omitted from the sensing reference signal port. This results in a wide beam used for transmitting the sensing reference signal. The beam broadened by the beam squint helps to reduce the beam sweeping period and accelerates the beam sweeping process, thereby achieving rapid sensing of the coarse granularity. For example, for the sensing target with a large cross-sectional area, based on the first information, a wide beam due to the squint is used to achieve lower precision sensing with the coarse granularity, which allows for rapid sensing.

In conjunction with some embodiments of the first aspect, in some embodiments, the beam phase compensation processing includes performing phase compensation on the precoding vector of the first frequency at the sensing reference signal port.

In the above embodiments, phase compensation is performed on the precoding vector of the first frequency at the sensing reference signal port, so as to precode the sensing reference signal using the compensated precoding vector. For example, the first frequency may be the frequency at which the sensing reference signal port needs compensation.

In conjunction with some embodiments of the first aspect, in some embodiments, the sensing reference signal is a broadband signal, and the narrowband subcarrier of the sensing reference signal port includes a first narrowband subcarrier and a second narrowband subcarrier. The compensated precoding vector of the first narrowband subcarrier is different from the precoding vector of the second narrowband subcarrier.

In the above embodiments, the narrowband subcarrier of a sensing reference signal port includes a first narrowband subcarrier and a second narrowband subcarrier. There may be multiple first narrowband subcarriers. Through beam phase compensation processing, the phase of elements in the precoding vector of the first narrowband subcarrier is compensated, while the phase of elements in the precoding vector of the second narrowband subcarrier is not compensated. Thus, the beam formed on the first narrowband subcarrier can be aligned with the beam formed on the second narrowband subcarrier.

In conjunction with some embodiments of the first aspect, in some embodiments, the antenna array used for transmitting the sensing reference signal via beamforming is a uniform linear array, and the uncompensated precoding vector is: ${w}_{0} \left(θ\right) = \frac{1}{\sqrt{{N}_{t}}} \left[\begin{matrix}1 \\ {e}^{- j \frac{2 π}{{λ}_{0}} d cos θ} \\ ⋮ \\ {e}^{- j \frac{2 π}{{λ}_{0}} nd cos θ} \\ ⋮ \\ {e}^{- j \frac{2 π}{{λ}_{0}} \left({N}_{t}-1\right) d cos θ}\end{matrix}\right] ,$ the phase rotation vector of the first frequency is: ${w}_{Δ} \left(r, θ\right) = \left[\begin{matrix}1 \\ {e}^{- j \frac{2 π}{{λ}_{0}} \left(r-1\right) d cos θ} \\ ⋮ \\ {e}^{- j \frac{2 π}{{λ}_{0}} n \left(r-1\right) d cos θ} \\ ⋮ \\ {e}^{- j \frac{2 π}{{λ}_{0}} \left({N}_{t}-1\right) \left(r-1\right) d cos θ}\end{matrix}\right] ,$ the compensated precoding vector is a vector obtained by multiplying the uncompensated precoding vector with the corresponding elements of the phase rotation vector of the first frequency. That is, the compensated precoding vector is the Schur product or Hadamard product of the uncompensated precoding vector with the phase rotation vector of the first frequency. *d* is the antenna spacing of the antenna array, *θ* is the target direction of the beam corresponding to the sensing reference signal port, *λ*₀ is the first wavelength, *λ*₀ *= c*/*f*₀, *f*₀ is the second frequency, *c* is the speed of light, *Nₜ* is the number of antenna ports in the antenna array, *j* is the imaginary unit, *e* is the natural constant, and *r* is the normalized frequency coefficient of the first frequency relative to the second frequency.

In conjunction with some embodiments of the first aspect, in some embodiments, the antenna array used for transmitting the sensing reference signal via beamforming is a uniform linear array, and the uncompensated precoding vector is represented as follows: ${w}_{0} = {\sum }_{i = 0}^{{N}_{t} - 1} {c}_{i} {v}_{0 , i} ,$ the phase rotation vector of v_{0,*i*} of the first frequency is: ${v}_{Δ , i} \left(r\right) = \left[\begin{matrix}1 \\ {e}^{- j \frac{2 π}{{N}_{t}} \left(r-1\right) i} \\ ⋮ \\ {e}^{- j \frac{2 π}{{N}_{t}} n \left(r-1\right) i} \\ ⋮ \\ {e}^{- j \frac{2 π}{{N}_{t}} \left({N}_{t}-1\right) \left(r-1\right) i}\end{matrix}\right] ,$ the compensated precoding vector is represented as: ${w}_{r} = {\sum }_{i = 0}^{{N}_{t} - 1} {c}_{i} {v}_{r , i} ,$ v*_{r,i}* is a vector obtained by multiplying v_{0,*i*} with the corresponding elements of v_{△,*i*}(*r*). That is, v*_{r,i}* is the Schur product or Hadamard product of v_{0,*i*} with v_{△,*i*}(*r*). v_{0,*i*} is the i-th column vector of the Discrete Fourier Transform (DFT) matrix of the dimension *Nₜ, cᵢ* is the weighting coefficient corresponding to v_{0,*i*}, *Nₜ* is the number of antenna ports in the antenna array, *j* is the imaginary unit, e is the natural constant, and *r* is the normalized frequency coefficient of the first frequency relative to the second frequency.

In conjunction with some embodiments of the first aspect, in some embodiments, the antenna array used to transmit the sensing reference signal via beamforming is a uniform area array, and the compensated precoding vector is the Kronecker product of the compensated precoding vector in the horizontal dimension and the compensated precoding vector in the vertical dimension. The compensated precoding vector in the horizontal dimension is the vector obtained by multiplying the uncompensated precoding vector in the horizontal dimension with the corresponding elements of the first phase rotation vector. That is, the compensated precoding vector in the horizontal dimension is the Schur product or Hadamard product of the uncompensated precoding vector in the horizontal dimension and the first phase rotation vector. The first phase rotation vector is the phase rotation vector of the first frequency in the horizontal dimension. The compensated precoding vector in the vertical dimension is the vector obtained by multiplying the uncompensated precoding vector in the vertical dimension by the corresponding elements of the second phase rotation vector. That is, the compensated precoding vector in the vertical dimension is the Schur product or Hadamard product of the uncompensated precoding vector in the vertical dimension and the second phase rotation vector. The second phase rotation vector is the phase rotation vector of the first frequency in the vertical dimension.

In conjunction with some embodiments of the first aspect, in some embodiments, the uncompensated precoding vector in the horizontal dimension is: ${w}_{0}^{\left(h\right)} \left(θ\right) = \frac{1}{\sqrt{{N}_{t}^{\left(h\right)}}} \left[\begin{matrix}1 \\ {e}^{- j \frac{2 π}{{λ}_{0}} {d}^{\left(h\right)} cos θ} \\ ⋮ \\ {e}^{- j \frac{2 π}{{λ}_{0}} {nd}^{\left(h\right)} cos θ} \\ ⋮ \\ {e}^{- j \frac{2 π}{{λ}_{0}} \left({N}_{t}^{\left(h\right)}-1\right) {d}^{\left(h\right)} cos θ}\end{matrix}\right] ,$ the phase rotation vector of the first frequency in the horizontal dimension is: ${w}_{Δ}^{\left(h\right)} \left(r, θ\right) = \left[\begin{matrix}1 \\ {e}^{- j \frac{2 π}{{λ}_{0}} \left(r-1\right) {d}^{\left(h\right)} cos θ} \\ ⋮ \\ {e}^{- j \frac{2 π}{{λ}_{0}} n \left(r-1\right) {d}^{\left(h\right)} cos θ} \\ ⋮ \\ {e}^{- j \frac{2 π}{{λ}_{0}} \left({N}_{t}^{\left(h\right)}-1\right) \left(r-1\right) {d}^{\left(h\right)} cos θ}\end{matrix}\right] ,$ the uncompensated precoding vector in the vertical dimension is: ${w}_{0}^{\left(v\right)} \left(ϕ\right) = \frac{1}{\sqrt{{N}_{t}^{\left(v\right)}}} \left[\begin{matrix}1 \\ {e}^{- j \frac{2 π}{{λ}_{0}} {d}^{\left(v\right)} cos ϕ} \\ ⋮ \\ {e}^{- j \frac{2 π}{{λ}_{0}} {nd}^{\left(v\right)} cos ϕ} \\ ⋮ \\ {e}^{- j \frac{2 π}{{λ}_{0}} \left({N}_{t}^{\left(v\right)}-1\right) {d}^{\left(v\right)} cos ϕ}\end{matrix}\right] ,$ and
the phase rotation vector of the first frequency in the vertical dimension is: ${w}_{Δ}^{\left(v\right)} \left(r, ϕ\right) = \left[\begin{matrix}1 \\ {e}^{- j \frac{2 π}{{λ}_{0}} \left(r-1\right) {d}^{\left(v\right)} cos ϕ} \\ ⋯ \\ {e}^{- j \frac{2 π}{{λ}_{0}} n \left(r-1\right) {d}^{\left(v\right)} cos ϕ} \\ ⋯ \\ {e}^{- j \frac{2 π}{{λ}_{0}} \left({N}_{t}^{\left(v\right)}-1\right) \left(r-1\right) {d}^{\left(v\right)} cos ϕ}\end{matrix}\right] ,$ where *d*^{(*h*)} is the antenna spacing of the antenna array in the horizontal dimension, *d*^{(*v*)} is the antenna spacing of the antenna array in the vertical dimension, *θ* is the target direction of the beam corresponding to the sensing reference signal port in the horizontal dimension, *ϕ* is the target direction of the beam corresponding to the sensing reference signal port in the vertical dimension, *λ*₀ is the first wavelength, *λ*₀ *= c*/*f*₀*, f*₀ is the second frequency, *c* is the speed of light, ${N}_{t}^{\left(h\right)}$ is the number of antenna ports contained in the antenna array in the horizontal dimension, ${N}_{t}^{\left(v\right)}$ is the number of antenna ports contained in the antenna array in the vertical dimension, *j* is the imaginary unit, *e* is the natural constant, and *r* is the normalized frequency coefficient of the first frequency relative to the second frequency.

In the various embodiments above, the precoding vector of the sensing reference signal port is represented in different ways, and the phase rotation vector of the first frequency also differs accordingly. Generally, in the above embodiments, for the first frequency of the sensing reference signal, the phase rotation vector of the first frequency is obtained based on the normalized frequency coefficient of the first frequency relative to the second frequency (which may be understood as the reference frequency). Phase compensation is then performed on the precoding vector based on the phase rotation vector of the first frequency. According to the formulas for the precoding vector and the phase rotation vector, the compensated precoding vector is a precoding vector that accurately points to the desired beam direction. Therefore, this helps to completely compensate for and overcome the beam squint, strictly aligns beams at different frequencies, transmits narrow beams, and achieves high-precision sensing.

In the second aspect, the embodiments of the present disclosure propose an information transmission method, which is executed by a core network element. The method includes: transmitting first information, where the first information indicates the granularity of sensing.

In the above embodiments, the core network element may transmit the first information to the electronic device where the transmitter is located, so as to indicate the granularity of sensing. This facilitates the electronic device where the transmitter is located to transmit the sensing reference signal via beamforming based on the first information.

In the third aspect, the embodiments of the present disclosure provide a beam transmission method, which includes: transmitting, by a core network element, first information to an electronic device where the transmitter is located, where the first information indicates the granularity of sensing; and transmitting, by the electronic device where the transmitter is located, a sensing reference signal based on the first information via beamforming.

In the fourth aspect, the embodiments of the present disclosure provide a sensing apparatus, including a transceiving module, configured to: receive first information, where the first information indicates the granularity of sensing; and transmit a sensing reference signal based on the first information via beamforming.

In the fifth aspect, the embodiments of the present disclosure provide a network device, including: a transceiving module configured to transmit first information, where the first information indicates the granularity of sensing.

In the sixth aspect, the embodiments of the present disclosure provide a sensing device, including: one or more processors. The sensing device is configured to perform the method described in the first aspect or example implementations thereof.

In the seventh aspect, the embodiments of the present disclosure provide a network device, including: one or more processors. The network device is configured to perform the method described in the second aspect or example implementations thereof.

In the eighth aspect, the embodiments of the present disclosure provide a sensing system, including a transmitter and a receiver. The transmitter is configured to implement the method described in the first aspect or example implementations thereof.

In the ninth aspect, the embodiments of the present disclosure provide a storage medium having instructions stored thereon. When the instructions are executed on a communication device, the communication device is caused to perform the method described in the first aspect or example implementations thereof, or to perform the method described in the second aspect or example implementations thereof.

In the tenth aspect, the embodiments of the present disclosure provide a program product. When the program product is executed by a communication device, the communication device is caused to perform the method described in the first aspect or example implementations thereof, or to perform the method described in the second aspect or example implementations thereof.

In the eleventh aspect, the embodiments of the present disclosure provide a computer program. When the computer program is run on a computer, the computer is caused to perform the method described in the first aspect or example implementations thereof, or to perform the method described in the second aspect or example implementations thereof.

In the twelfth aspect, the embodiments of the present disclosure provide a chip or chip system. The chip or chip system includes processing circuitry configured to perform the method described in the first aspect or example implementations thereof, or to perform the method described in the second aspect or example implementations thereof.

It is understood that the aforementioned sensing apparatus, network device, sensing system, storage medium, program product, computer program, chip, or chip system are all used to perform the method(s) proposed in the embodiments of the present disclosure. Therefore, the beneficial effects that can be achieved may be referred to the beneficial effects in the corresponding method(s), and will not be repeated here.

The embodiments of the present disclosure provide a beam transmission method, an information transmission method, a sensing apparatus, and a sensing system. In some embodiments, terms such as beam transmission method, signal transmission method, and sensing method may be used interchangeably; terms such as information transmission method and sensing method may be used interchangeably; and terms such as sensing system, communication system, and communication and sensing system may be used interchangeably. In some embodiments, the transmitter includes a transmitter for sensing (hereinafter referred to as a sensing transmitter). In some embodiments, the receiver includes a receiver for sensing (hereinafter referred to as a sensing receiver).

The embodiments of the present disclosure are not exhaustive, but merely illustrative of some embodiments, and are not intended to limit the scope of protection of the present disclosure. Unless contradictory, each step in a certain embodiment may be implemented as an independent embodiment, and the steps may be arbitrarily combined. For example, a scheme after removing some steps in a certain embodiment may also be implemented as an independent embodiment, and the order of the steps in a certain embodiment may be arbitrarily interchanged. Furthermore, the example implementations in a certain embodiment may be arbitrarily combined. Moreover, the embodiments may be arbitrarily combined. For example, some or all steps of different embodiments may be arbitrarily combined, and a certain embodiment may be arbitrarily combined with example implementations of other embodiments.

In various embodiments of the present disclosure, unless otherwise specified or logically conflicting, the terminology and/or descriptions are consistent between various embodiments and may be mutually referenced. Technical features in different embodiments may be combined to form new embodiments based on their inherent logical relationships.

The terminology used in the embodiments of the present disclosure is for the purpose of describing specific embodiments only and is not intended to limit the present disclosure.

In the embodiments of the present disclosure, unless otherwise stated, elements expressed in the singular form, such as "a", "an", "the", "said", "described", "foregoing", "this", etc., may indicate "one and only one", "one or more", or "at least one", etc. For example, when using articles such as "a", "an", "the", etc., in translation, the noun following the article may be understood as either a singular or a plural expression.

In the embodiments of the present disclosure, "multiple" refers to two or more.

In some embodiments, the terms such as "at least one of", "one or more", "a plurality of", and "multiple" may be used interchangeably.

In some embodiments, expressions such as "at least one of A or B", "A and/or B", "A in one case, B in another case", and "in response to one case A, in response to another case B" may, depending on the situations, include the following technical solutions: in some embodiments, A (executed regardless of B); in some embodiments, B (executed regardless of A); in some embodiments, execution is selected from A and B (A and B are selectively executed); in some embodiments, A and B (both A and B are executed). The same applies when there are more branches such as A, B, C, etc.

In some embodiments, the notation "A or B" may include the following technical solutions, depending on the situations: in some embodiments, A (execution of A regardless of B); in some embodiments, B (execution of B regardless of A); in some embodiments, execution is selected from A and B (A and B are selectively executed). The same applies when there are more branches such as A, B, C, etc.

The prefixes such as "first", "second", etc., in the embodiments of the present disclosure are merely for distinguishing different descriptive objects and do not constitute restrictions on the position, order, priority, quantity, or content of the descriptive objects. The description of the descriptive objects should be referred to in the claims or the context of the embodiments. The use of prefixes should not constitute unnecessary restrictions. For example, if the descriptive object is a "field", then the ordinal numbers before "field" in "first field" and "second field" do not restrict the position or order of the "fields". "First" and "second" neither restrict whether the "fields" they modify are in the same message, nor restrict the order of "first field" and "second field". Similarly, if the descriptive object is a "level", then the ordinal numbers before "level" in "first level" and "second level" do not restrict the priority between "levels". For example, the number of objects described is not limited by the ordinal numbers, and it may be one or more. Taking "first device" as an example, the number of "devices" may be one or more. Furthermore, objects modified by different prefixes may be the same or different. For instance, if the object is described as "device", then "first device" and "second device" may be the same device or different devices, and their types may be the same or different. Similarly, if the object is described as "information", then "first information" and "second information" may be the same information or different information, and their contents may be the same or different.

In some embodiments, "including A", "containing A", "for indicating A", and "carrying A" may be interpreted as directly carrying A or indirectly indicating A.

In some embodiments, terms such as "in response to", "in response to determining", "in the case of", "when","while", "if","in case that" etc., may be interchanged.

In some embodiments, terms such as "greater than", "greater than or equal to", "not less than", "more than", "more than or equal to", "not less than", "higher than", "higher than or equal to", "not lower than", and "above" may be used interchangeably. Similarly, terms such as "less than", "less than or equal to", "not greater than", "less than", "less than or equal to", "not more than", "lower than", "lower than or equal to", "not higher than", and "below" may be used interchangeably.

In some embodiments, devices and apparatuses may be interpreted as physical or virtual, and their names are not limited to those described in the embodiments. In some cases, they may also be understood as "equipment", "device", "circuit", "network element", "node", "function", "unit", "section", "system", "network", "chip", "chip system", "entity", "main body", etc.

In some embodiments, "network" may be interpreted as devices included in the network, such as access network device, core network device, etc.

In some embodiments, "access network device (AN device)" may also be referred to as "radio access network device (RAN device)", "base station (BS)", "radio base station", or "fixed station". In some embodiments, it may also be understood as "node", "access point", "transmission point (TP)", "reception point (RP)", "transmission and/or reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc.

In some embodiments, "terminal" or "terminal device" may be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc.

In some embodiments, the acquisition of data, information, etc., may comply with the laws and regulations of the country where the user is located.

In some embodiments, data, information, etc., may be acquired with the user's consent.

Furthermore, each element, row, or column in the tables in the embodiments of the present disclosure may be implemented as an independent embodiment, and the combination of any element, any row, and any column may also be implemented as an independent embodiment.

Wireless communication and wireless sensing are highly similar. Integrated Sensing and Communication (ISAC) may combine wireless communication and wireless sensing, introducing close cooperation between the two. Thus, both wireless communication and wireless sensing can benefit, improving the effectiveness and reliability of wireless communication on one hand, and improving the accuracy of wireless sensing on the other hand. Moreover, devices that simultaneously support wireless communication and wireless sensing can reduce the network deployment cost.

In wireless sensing, it is usually necessary to estimate the distance, azimuth angle (such as horizontal and vertical angles), and velocity of the sensing target. Broadly defined sensing also includes wireless tracking and radio frequency identification of the sensing target. To achieve high-precision sensing, the transmitter typically transmits a dedicated reference signal for sensing, which, for ease of description, is referred to below as a sensing reference signal. For example, the sensing reference signal may not carry information or data for communication. For example, the sensing reference signal may be called a sensing signal.

It is understood that wireless sensing may encompass various sensing scenarios, such as sensing between terminals, sensing between a terminal and a network device, sensing between network devices, etc.

In some embodiments, in the monostatic mode, the transmitter may transmit a sensing reference signal, and by measuring the echo of the sensing reference signal, at least one of the distance, angle, velocity, etc., of the sensing target can be estimated.

In some embodiments, in the bistatic mode, the transmitter may transmit a sensing reference signal, and the receiver may receive and measure the sensing reference signal to estimate at least one of the distance, angle, velocity, etc., of the sensing target.

In the monostatic mode, the transmitter and the receiver may be located on the same device, such as the same terminal or the same network device. In the bistatic mode, the transmitter and the receiver may be located on different devices, such as the transmitter on one terminal and the receiver on another terminal, or the transmitter on a terminal and the receiver on a network device, or the transmitter on one network device and the receiver on another network device, or the transmitter on a network device and the receiver on a terminal.

In some embodiments, whether in the monostatic, bistatic, or even multistatic mode, each receiver may report its measurement results of the sensing reference signal to a core network unit. In some embodiments, the core network unit is, for example, a location management function (LMF). In some embodiments, the core network unit is, for example, a sensing network unit, such as a sensing management function (SMF). It is understood that in some embodiments, the core network unit may also be other network units. Ultimately, these core network units calculate at least one of the distance, angle, velocity, etc., of each sensing target, and/or construct a wireless sensing map, etc.

Taking estimation of the distance to a sensing target as an example, the receiver needs to accurately estimate the arrival time of the first echo path reflected by the sensing target (monostatic mode) or the first path scattered by the sensing target (bistatic mode). To improve the accuracy of distance sensing, a high temporal resolution is required. Therefore, the sensing reference signal needs a large bandwidth.

In high-frequency bands such as millimeter wave (mmWave), sub-tera Hertz (subThz), tera Hertz (THz), etc, the requirement for large bandwidth is relatively easier to meet. However, these high-frequency resources suffer from exceptionally severe propagation losses. In such cases, large-scale antenna arrays using beamforming are necessary for sensing. Otherwise, severe high-frequency transmission losses will significantly reduce the accuracy and performance of sensing.

On one hand, even with beamforming, high-precision sensing is limited to sensing targets within or near the beam's coverage area. For targets outside the beam's coverage area or far away from the beam's coverage area, sensing accuracy is low, and sensing performance cannot be guaranteed. Therefore, the transmitter needs to perform beam sweeping to sense surrounding targets. However, the higher the carrier frequency, the narrower the beam. For a given area, more beams are needed for beam sweeping, and the time required is longer.

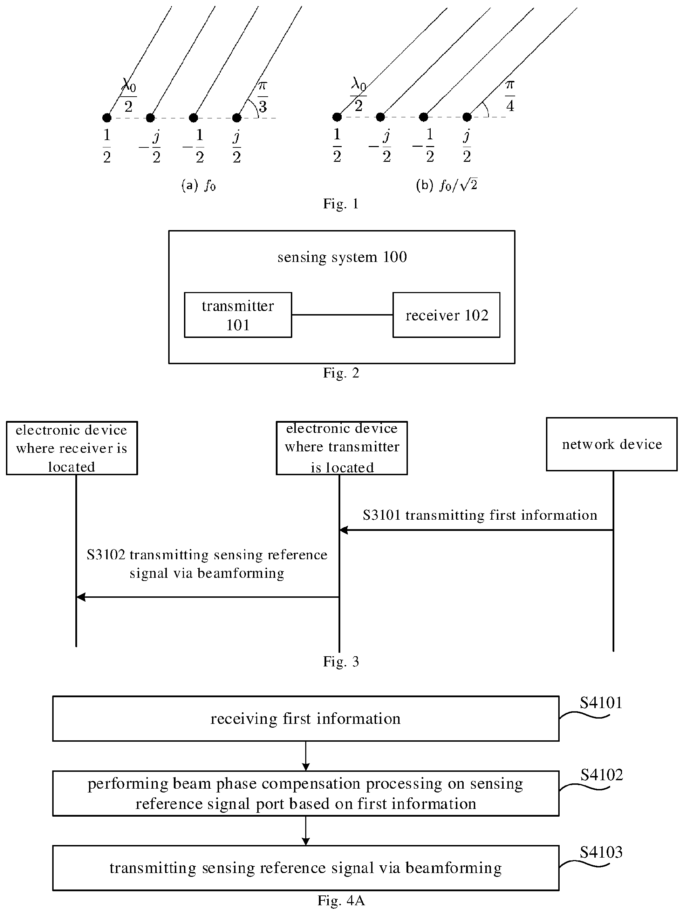

On the other hand, large-scale antenna arrays (MSA) may exhibit beam squint phenomenon in wide-bandwidth applications. This means that a given precoding vector may form beams pointing in different directions at different frequencies (e.g., on different subcarriers in an Orthogonal Frequency Division Multiplexing (OFDM) system). Fig. 1 illustrates an example diagram of beam squint. For example, as shown in Fig. 1, the beam formed by the precoding vector *w* = 1/2[1 - *j -* 1 *j*]*^{T}* at frequency *f*₀ points in the direction π/3, while the beam formed at frequency *f*₀/√2 points in the direction π/4. Clearly, beam squint phenomenon causes beams formed on certain frequency resources to deviate from their intended directions, leading to a decrease in beamforming gain.

Furthermore, it is worth noting that there are many types of scatterers (including sensing targets and non-sensing targets). Some scatterers have large cross-sectional areas. If a narrow beam is used for sweeping, multiple beams will sense different parts of the same scatterer, which is obviously unnecessary. Some scatterers have small cross-sectional areas, requiring a narrow beam for sweeping to ensure sensing accuracy. Therefore, in some embodiments, the requirements for the sensing reference signal in a sensing scenario may depend on the characteristics of the specific sensing target (e.g., the type, cross-sectional area, etc. of the sensing target) and the characteristics of the surrounding scatterers.

Fig. 2 is a schematic diagram of a sensing system according to an embodiment of the present disclosure. As shown in Fig. 2, the sensing system 100 may include a transmitter 101 and a receiver 102. In some embodiments, the transmitter 101 includes a sensing transmitter. In some embodiments, the receiver 102 includes a sensing receiver.

It should be noted that the number of transmitters 101 and the number of receivers 102 shown in Fig. 2 are merely an example and do not constitute a limitation on the embodiments of the present disclosure. In practice, there may be one or more transmitters 101 and one or more receivers 102.

In some embodiments, the transmitter 101 may be located in a terminal or a network device.

In some embodiments, the receiver 102 may be located in a terminal or a network device.

In some embodiments, the transmitter 101 and the receiver 102 may be located in the same device. For example, the transmitter 101 and the receiver 102 may be located in the same terminal or in the same network device.

In some embodiments, the transmitter 101 and the receiver 102 may be located in different devices. For example, the transmitter 101 may be located in one terminal and the receiver 102 in another terminal. For example, the transmitter 101 may be located in a terminal and the receiver 102 in a network device. For example, the transmitter 101 may be located in one network device and the receiver 102 in another network device. For example, the transmitter 101 may be located in a network device and the receiver 102 in a terminal.

In some embodiments, the terminal may include at least one of, but is not limited to, a mobile phone, a wearable device, an Internet of Things (IoT) device, a car with sensing capabilities, a smart car, a tablet computer (Pad), a computer with wireless transceiving capabilities, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, or a wireless terminal device in a smart home.

In some embodiments, the network device includes, for example, an access network device, which may include at least one of the following: an evolved NodeB (eNB) in a 5G communication system, a next-generation eNB (ng-eNB), a next-generation NodeB (gNB), a node B (NB), a home node B (HNB), a home evolved node B (HeNB), a radio backhaul device, a radio network controller (RNC), a base station controller (BSC), a base transceiver station (BTS), a base band unit (BBU), a mobile switching center, a base station in a 6G communication system, an open RAN, a cloud RAN, a base station in other communication systems, or an access node in a Wi-Fi system, but is not limited thereto.

Fig. 3 is an interactive schematic diagram of a beam transmission method according to an embodiment of the present disclosure. As shown in Fig. 3, the embodiments of the present disclosure relate to a beam transmission method and an information transmission method, the method including steps S3101 and S3102.

Step S3101, a network device transmits first information.

In some embodiments, the network device is, for example, an access network device or a core network device. In some embodiments, the network device includes a first network element. In some embodiments, the first network element is, for example, an LMF or an SMF. In some embodiments, the first network element may be used to transmit the first information to an electronic device where a transmitter is located, and/or to process the measurement results of the sensing reference signal by an electronic device where a receiver is located, and the names thereof are not limited thereto.

In some embodiments, the network device transmits the first information to the electronic device where the transmitter is located.

In some embodiments, the first information may be used to indicate the granularity of sensing. The granularity of sensing may represent the step size when performing a sensing traversal (sweeping) for a given sensing range. A larger step size indicates a coarser granularity of sensing, and a smaller step size indicates a finer granularity of sensing. Taking angle sensing as an example, if the angle range of sensing is 120 degrees, and a beam with a beamwidth of 30 degrees is used for sensing, then four non-overlapping beams are needed to complete the sensing of the 120-degree angle range, resulting in a coarser granularity of sensing in this case. If a beam with a beamwidth of 20 degrees is used for sensing, then six non-overlapping beams are needed to complete the sensing of the 120-degree angle range, resulting in a finer granularity of sensing in this case.

For example, the first information may be used to indicate a first granularity. The first granularity may be the refined granularity. Alternatively, the first information may indicate a second granularity, and the second granularity may be such as a coarse granularity. In some embodiments, the name of the first information is not limited, and it may be, for example, "granularity indicator (GI)".

In some embodiments, the first information may be carried in various existing signaling, such as Downlink Control Information (DCI) or Radio Resource Control (RRC) messages, etc., without limitation.

In some embodiments, the first information may be used to determine whether beam phase compensation processing should be performed. Beam phase compensation processing refers to performing phase rotation on elements of the precoding vector corresponding to the beam, for example, performing a phase rotation on each element of the precoding vector corresponding to the beam. For example, a beam is formed by an antenna array including N antenna ports. Assuming that the phase of the i-th element of the uncompensated precoding vector (corresponding to the i-th antenna port) is αi, and the phase rotation of the i-th element (corresponding to the i-th antenna port) of the phase rotation vector for beam phase compensation is βi. Then, the phase of the i-th element (corresponding to the i-th antenna port) of the compensated precoding vector is αi + βi. In some embodiments, the name of the beam phase compensation processing is not limited, and it may be, for example, "predistortion processing", etc.

In some embodiments, the first information is used to determine whether beam phase compensation processing should be performed on the sensing reference signal port. Each port of the sensing reference signal may be referred to as a sensing reference signal port. In some embodiments, the electronic device where the transmitter is located receives the first information and, and based on the granularity of sensing indicated by the first information, performs beam phase compensation processing on the sensing reference signal port, or does not perform beam phase compensation processing on the sensing reference signal port.

In some embodiments, the electronic device where the transmitter is located may transmit a request message to the network device, the request message being used to request the first information. Upon receiving the request message, the network device transmits the first information.

Step S3102: the electronic device where the transmitter is located transmits the sensing reference signal via beamforming.

Step S3101 is an example step. If step S3101 is not executed, and the electronic device where the transmitter is located does not obtain the first information, the granularity of sensing may be set to a default value, thereby determining whether to perform beam phase compensation processing; or, a default configuration may be obtained, and the determination about whether to perform beam phase compensation processing may be based on the default configuration. For example, the default configuration includes a default value for the granularity of sensing.

In an implementation, the electronic device where the transmitter is located performs beam phase compensation processing on the sensing reference signal port based on the first information and transmits the sensing reference signal via beamforming. In another implementation, the electronic device where the transmitter is located does not perform beam phase compensation processing on the sensing reference signal port based on the first information, and transmits the sensing reference signal via beamforming.

In some embodiments, whether to perform beam phase compensation processing on the sensing reference signal port may include, but is not limited to, at least one of the following implementations:
the first information indicates the first granularity of sensing, and beam phase compensation processing is performed on the sensing reference signal port;
the first information does not indicate the first granularity of sensing, and beam phase compensation processing is not performed on the sensing reference signal port;
the first information indicates the second granularity of sensing, and beam phase compensation processing is not performed on the sensing reference signal port;
the first information does not indicate the second granularity of sensing, and beam phase compensation processing is performed on the sensing reference signal port.

In some embodiments, an example implementation of determining whether to perform beam phase compensation processing based on a default value of the granularity of sensing may be found in the above implementation(s).

In some embodiments, performing beam phase compensation processing on the sensing reference signal port may include: performing beam phase compensation processing on at least one sensing reference signal port.

In some embodiments, not performing beam phase compensation processing on the sensing reference signal port may include: not performing beam phase compensation processing on any of the sensing reference signal ports.

In some embodiments, the first information indicates the first granularity of sensing. The electronic device where the transmitter is located performs beam phase compensation processing on at least one sensing reference signal port and transmits the sensing reference signal via beamforming. It is understood that in this case, the beam used for transmitting the sensing reference signal is a narrow beam or a relatively narrow beam. The beam phase compensation processing can completely or partially compensate for and overcome the beam squint, thereby achieving high-precision sensing of the refined granularity.

In some embodiments, the first information indicates the second granularity of sensing. The electronic device where the transmitter is located does not perform beam phase compensation processing on any of the sensing reference signal ports and transmits the sensing reference signal via beamforming. It is understood that in this case, the beam used for transmitting the sensing reference signal is a wide beam. Since the beam widened by beam squint can reduce the beam sweeping period and accelerate the beam sweeping process, the rapid sensing of the coarse granularity can be achieved.

Based on the above embodiments, the embodiments of the present disclosure propose an adaptive sensing method. Based on the first information transmitted by the network device, the granularity and precision of sensing can be flexibly and dynamically adjusted, which is beneficial for quickly completing the construction of a sensing map and/or the construction of a high-precision sensing map. In an example, for a sensing target with a large cross-sectional area, the first information may be transmitted to indicate the second granularity, thereby using a wide beam due to squint for the lower-precision sensing of the coarse granularity, enabling rapid sensing. In another example, for a sensing target with a small cross-sectional area or requiring further sensing, the first information may be sent to indicate the first granularity, thereby using a pre-distorted narrow beam for a higher-precision sensing of the refined granularity. In some embodiments, pre-distortion processing can compensate for and overcome beam squint, strictly aligning beams at different frequencies to achieve high-precision sensing. In some embodiments, pre-distortion processing can at least partially compensate for beam squint.

According to the above embodiments, the electronic device where the transmitter is located, based on the first information, can achieve either rapid sensing of the coarse granularity or high-precision sensing of the refined granularity, by either not compensating for or compensating for the phase of the squint beam.

In some embodiments, the beam phase compensation processing may introduce a phase rotation into each element of the precoding vector corresponding to the sensing reference signal port.

In some embodiments, the beam phase compensation processing includes phase compensation for the precoding vector of the first frequency at the sensing reference signal port. In some embodiments, the first frequency may be understood as the frequency at which the sensing reference signal port needs to be compensated, and there may be multiple first frequencies.

To facilitate understanding of the specific process of the beam phase compensation processing, the example implementations thereof are described below.

### Implementation 1:

The antenna array used to transmit the sensing reference signal via beamforming is a uniform linear array (ULA).

Assume that the (uncompensated) precoding vector used for the sensing reference signal port is: ${w}_{0} \left(θ\right) = \frac{1}{\sqrt{{N}_{t}}} \left[\begin{matrix}1 \\ {e}^{- j \frac{2 π}{{λ}_{0}} d cos θ} \\ ⋮ \\ {e}^{- j \frac{2 π}{{λ}_{0}} nd cos θ} \\ ⋮ \\ {e}^{- j \frac{2 π}{{λ}_{0}} \left({N}_{t}-1\right) d cos θ}\end{matrix}\right] ,$ where *d* is the antenna spacing of the antenna array, *θ* is the target direction (the desired beam direction) of the beam corresponding to the sensing reference signal port, for example *θ* ∈ [0,π], *λ*₀ is the first wavelength, *λ*₀ *= c*/*f*₀, *f*₀ is the second frequency, *c* is the speed of light, *Nₜ* is the number of antenna ports contained in the antenna array, $j = \sqrt{- 1}$ is the imaginary unit, and *e* is the natural constant. In some embodiments, the first wavelength may be understood as the reference wavelength, and the second frequency may be understood as the reference frequency.

The phase rotation vector of the first frequency is: ${w}_{Δ} \left(r, θ\right) = \left[\begin{matrix}1 \\ {e}^{- j \frac{2 π}{{λ}_{0}} \left(r-1\right) d cos θ} \\ ⋮ \\ {e}^{- j \frac{2 π}{{λ}_{0}} n \left(r-1\right) d cos θ} \\ ⋮ \\ {e}^{- j \frac{2 π}{{λ}_{0}} \left({N}_{t}-1\right) \left(r-1\right) d cos θ}\end{matrix}\right] ,$ where *r* is the normalized frequency coefficient of the first frequency relative to the second frequency. For example, *f*₀ is the second frequency, *rf*₀ is the first frequency, *r* < 1 indicates that the first frequency is lower than the second frequency, *r* > 1 indicates that the first frequency is higher than the second frequency, and in particular, *r* = 1 indicates that the first frequency is equal to the second frequency.

For the first frequency *r f*₀, the compensated precoding vector is: ${w}_{r} \left(θ\right) = \frac{1}{\sqrt{{N}_{t}}} \left[\begin{matrix}1 \\ {e}^{- j \frac{2 π}{{λ}_{0}} dr cos θ} \\ ⋮ \\ {e}^{- j \frac{2 π}{{λ}_{0}} ndr cos θ} \\ ⋮ \\ {e}^{- j \frac{2 π}{{λ}_{0}} \left({N}_{t}-1\right) dr cos θ}\end{matrix}\right] .$ That is, the compensated precoding vector is the vector obtained by multiplying the uncompensated precoding vector with the corresponding elements of the phase rotation vector of the first frequency. That is, the compensated precoding vector is the Schur product or Hadamard product of the uncompensated precoding vector and the phase rotation vector of the first frequency.

It is worth noting that the second frequency is not limited in the embodiments of the present disclosure, and it may be any frequency.

In some embodiments, the second frequency may take the following typical values:
carrier frequency;
center frequency;
the frequency at which the center frequency/lowest frequency/highest frequency subcarrier is located;
the frequency determined by the antenna spacing, for example, taking an antenna array with a half-wavelength spacing: $d = \frac{{λ}_{0}}{2} = \frac{c}{2 {f}_{0}}$
as an example, the second frequency is: ${f}_{0} = \frac{c}{2 d} .$

### Implementation 2:

The antenna array used to transmit the sensing reference signal via beamforming is ULA.

Suppose that the (uncompensated) precoding vector used for the sensing reference signal port may be represented as: ${w}_{0} = {\sum }_{i = 0}^{{N}_{t} - 1} {c}_{i} {v}_{0 , i} ,$ where v_{0,*i*} is the i-th column vector of the Discrete Fourier Transform (DFT) matrix of the dimension *Nₜ,* for example: ${v}_{0 , i} = \frac{1}{\sqrt{{N}_{t}}} \left[\begin{matrix}1 \\ {e}^{- j \frac{2 π}{{N}_{t}} i} \\ ⋮ \\ {e}^{- j \frac{2 π}{{N}_{t}} in} \\ ⋮ \\ {e}^{- j \frac{2 π}{{N}_{t}} i \left({N}_{t}-1\right)}\end{matrix}\right] ,$ *cᵢ* is the corresponding weighting coefficient of v_{0,*i*}, for example, *cᵢ* is the corresponding orthogonal projection coefficient of v_{0,*i*}, *Nₜ* is the number of antenna ports contained in the antenna array, $j = \sqrt{- 1}$ is the imaginary unit, and *e* is the natural constant.

The phase rotation vector of v_{0,*i*} of the first frequency is: ${v}_{Δ , i} \left(r\right) = \left[\begin{matrix}1 \\ {e}^{- j \frac{2 π}{{N}_{t}} \left(r-1\right) i} \\ ⋮ \\ {e}^{- j \frac{2 π}{{N}_{t}} n \left(r-1\right) i} \\ ⋮ \\ {e}^{- j \frac{2 π}{{N}_{t}} \left({N}_{t}-1\right) \left(r-1\right) i}\end{matrix}\right] ,$ where *r* is the normalized frequency coefficient of the first frequency relative to the second frequency. For example, *f*₀ is the second frequency, *r f*₀ is the first frequency, *r* < 1 indicates that the first frequency is lower than the second frequency, *r* > 1 indicates that the first frequency is higher than the second frequency, and specifically, *r* = 1 indicates that the first frequency is equal to the second frequency. In some embodiments, the second frequency may be understood as a reference frequency.

For the first frequency *r f*₀, the compensated precoding vector may be represented as: ${w}_{r} = {\sum }_{i = 0}^{{N}_{t} - 1} {c}_{i} {v}_{r , i} ,$ where ${v}_{r , i} = \frac{1}{\sqrt{{N}_{t}}} \left[\begin{matrix}1 \\ {e}^{- j \frac{2 π}{{N}_{t}} ri} \\ ⋮ \\ {e}^{- j \frac{2 π}{{N}_{t}} rin} \\ ⋮ \\ {e}^{- j \frac{2 π}{{N}_{t}} ri \left({N}_{t}-1\right)}\end{matrix}\right] .$ That is, v*_{r,i}* is the vector obtained by multiplying v_{0,*i*} with the corresponding elements of v_{△,*i*}(*r*). That is, v*_{r,i}* is the Schur product or Hadamard product of v_{0,*i*} and v_{△,*i*}(*r*).

It is worth noting that the second frequency is not limited in the embodiments of the present disclosure and it may be any frequency.

In some embodiments, the second frequency may take the following typical values:
carrier frequency;
center frequency;
frequency at which the center frequency/lowest frequency/highest frequency subcarrier is located;
the frequency determined by the antenna spacing, for example, taking an antenna array with a half-wavelength spacing: $d = \frac{{λ}_{0}}{2} = \frac{c}{2 {f}_{0}}$
as an example, the second frequency is: ${f}_{0} = \frac{c}{2 d} .$

### Implementation 3:

The antenna array used to transmit the sensing reference signal via beamforming is a uniform planar array (UPA).

The compensated precoding vector is the Kronecker product of the compensated precoding vector in the horizontal dimension and the compensated precoding vector in the vertical dimension. The compensated precoding vector in the horizontal dimension is obtained by multiplying the uncompensated precoding vector in the horizontal dimension with the corresponding elements of the first phase rotation vector. That is, the compensated precoding vector in the horizontal dimension is the Schur product or Hadamard product of the uncompensated precoding vector in the horizontal dimension and the first phase rotation vector. The first phase rotation vector is the phase rotation vector of the first frequency in the horizontal dimension. The compensated precoding vector in the vertical dimension is the vector obtained by multiplying the uncompensated precoding vector in the vertical dimension and the corresponding elements of the second phase rotation vector. That is, the compensated precoding vector in the vertical dimension is the Schur product or Hadamard product of the uncompensated precoding vector in the vertical dimension and the second phase rotation vector. The second phase rotation vector is the phase rotation vector of the first frequency in the vertical dimension.

Assume that the (uncompensated) precoding vector used for the sensing reference signal port is: ${w}_{0} \left(θ, ϕ\right) = {w}_{0}^{\left(h\right)} \left(θ\right) ⊗ {w}_{0}^{\left(υ\right)} \left(ϕ\right) .$ For example, ${w}_{0}^{\left(h\right)} \left(θ\right) = \frac{1}{\sqrt{{N}_{t}^{\left(h\right)}}} \left[\begin{matrix}1 \\ {e}^{- j \frac{2 π}{{λ}_{0}} {d}^{\left(h\right)} cos θ} \\ ⋮ \\ {e}^{- j \frac{2 π}{{λ}_{0}} {nd}^{\left(h\right)} cos θ} \\ ⋮ \\ {e}^{- j \frac{2 π}{{λ}_{0}} \left({N}_{t}^{\left(h\right)}-1\right) {d}^{\left(h\right)} cos θ}\end{matrix}\right]$ is the (uncompensated) precoding vector in the horizontal dimension. ${w}_{0}^{\left(υ\right)} \left(ϕ\right) = \frac{1}{\sqrt{{N}_{t}^{\left(υ\right)}}} \left[\begin{matrix}1 \\ {e}^{- j \frac{2 π}{{λ}_{0}} {d}^{\left(υ\right)} cos ϕ} \\ ⋮ \\ {e}^{- j \frac{2 π}{{λ}_{0}} {nd}^{\left(υ\right)} cos ϕ} \\ ⋮ \\ {e}^{- j \frac{2 π}{{λ}_{0}} \left({N}_{t}^{\left(υ\right)}-1\right) {d}^{\left(υ\right)} cos ϕ}\end{matrix}\right]$ is the (uncompensated) precoding vector in the vertical dimension.
*d*^{(*h*)} is the antenna spacing of the antenna array in the horizontal dimension, *d*^{(*v*)} is the antenna spacing of the antenna array in the vertical dimension, *θ* is the target direction (the desired beam direction) of the beam corresponding to the sensing reference signal port in the horizontal dimension, and *ϕ* is the target direction (the desired beam direction) of the beam corresponding to the sensing reference signal port in the vertical dimension. For example, *θ*, *ϕ* ∈ [0, *π*], *λ*₀ is the first wavelength, *λ*₀ *= c*/*f*₀, *f*₀ is the second frequency, *c* is the speed of light, ${N}_{t}^{\left(h\right)}$ is the number of antenna ports contained in the antenna array in the horizontal dimension, ${N}_{t}^{\left(υ\right)}$ is the number of antenna ports contained in the antenna array in the vertical dimension, $j = \sqrt{- 1}$ is the imaginary unit, and *e* is the natural constant. In some embodiments, the first wavelength may be understood as the reference wavelength, and the second frequency may be understood as the reference frequency.

The phase rotation vector of the first frequency in the horizontal dimension is: ${w}_{Δ}^{\left(h\right)} \left(r, θ\right) = \left[\begin{matrix}1 \\ {e}^{- j \frac{2 π}{{λ}_{0}} \left(r-1\right) {d}^{\left(h\right)} cos θ} \\ ⋮ \\ {e}^{- j \frac{2 π}{{λ}_{0}} n \left(r-1\right) {d}^{\left(h\right)} cos θ} \\ ⋮ \\ {e}^{- j \frac{2 π}{{λ}_{0}} \left({N}_{t}^{\left(h\right)}-1\right) \left(r-1\right) {d}^{\left(h\right)} cos θ}\end{matrix}\right] .$

The phase rotation vector of the first frequency in the vertical dimension is: ${w}_{Δ}^{\left(υ\right)} \left(r, ϕ\right) = \left[\begin{matrix}1 \\ {e}^{- j \frac{2 π}{{λ}_{0}} \left(r-1\right) {d}^{\left(υ\right)} cos ϕ} \\ ⋯ \\ {e}^{- j \frac{2 π}{{λ}_{0}} n \left(r-1\right) {d}^{\left(υ\right)} cos ϕ} \\ ⋯ \\ {e}^{- j \frac{2 π}{{λ}_{0}} \left({N}_{t}^{\left(υ\right)}-1\right) \left(r-1\right) {d}^{\left(υ\right)} cos ϕ}\end{matrix}\right] .$

For the first frequency *r f*₀, the compensated precoding vector is: ${w}_{r} \left(θ, ϕ\right) = {w}_{r}^{\left(h\right)} \left(θ\right) ⊗ {w}_{r}^{\left(υ\right)} \left(ϕ\right) .$ For example, ${w}_{r}^{\left(h\right)} \left(θ\right) = \frac{1}{\sqrt{{N}_{t}^{\left(h\right)}}} \left[\begin{matrix}1 \\ {e}^{- j \frac{2 π}{{λ}_{0}} {d}^{\left(h\right)} r cos θ} \\ ⋮ \\ {e}^{- j \frac{2 π}{{λ}_{0}} {nd}^{\left(h\right)} r cos θ} \\ ⋮ \\ {e}^{- j \frac{2 π}{{λ}_{0}} \left({N}_{t}^{\left(h\right)}-1\right) {d}^{\left(h\right)} r cos θ}\end{matrix}\right]$ is the compensated precoding vector in the horizontal dimension. ${w}_{r}^{\left(υ\right)} \left(ϕ\right) = \frac{1}{\sqrt{{N}_{t}^{\left(υ\right)}}} \left[\begin{matrix}1 \\ {e}^{- j \frac{2 π}{{λ}_{0}} {d}^{\left(υ\right)} r cos ϕ} \\ ⋮ \\ {e}^{- j \frac{2 π}{{λ}_{0}} {nd}^{\left(υ\right)} r cos ϕ} \\ ⋮ \\ {e}^{- j \frac{2 π}{{λ}_{0}} \left({N}_{t}^{\left(υ\right)}-1\right) {d}^{\left(υ\right)} r cos ϕ}\end{matrix}\right]$ is the compensated precoding vector in the vertical dimension.

That is, the compensated precoding vector ${w}_{r}^{\left(h\right)} \left(θ\right)$ in the horizontal dimension is the vector obtained by multiplying the uncompensated precoding vector ${w}_{0}^{\left(h\right)} \left(θ\right)$ in the horizontal dimension with the corresponding element of the phase rotation vector ${w}_{Δ}^{\left(h\right)} \left(r, θ\right)$ of the first frequency in the horizontal dimension. That is, ${w}_{r}^{\left(h\right)} \left(θ\right)$ is the Schur product or Hadamard product of ${w}_{0}^{\left(h\right)} \left(θ\right)$ and ${w}_{Δ}^{\left(h\right)} \left(r, θ\right)$. The compensated precoding vector ${w}_{r}^{\left(v\right)} \left(ϕ\right)$ in the vertical dimension is the vector obtained by multiplying the uncompensated precoding vector ${w}_{0}^{\left(v\right)} \left(ϕ\right)$ in the vertical dimension with the corresponding element of the phase rotation vector of the first frequency ${w}_{Δ}^{\left(v\right)} \left(r, ϕ\right)$ in the vertical dimension. That is, ${w}_{r}^{\left(v\right)} \left(ϕ\right)$ is the Schur product or Hadamard product of ${w}_{0}^{\left(v\right)} \left(ϕ\right)$ and ${w}_{Δ}^{\left(v\right)} \left(r, ϕ\right)$.

It is worth noting that the second frequency is not limited in the embodiments of the present disclosure and it may be any frequency.

In some embodiments, the second frequency may take the following typical values:
carrier frequency;
center frequency;
frequency at which the center frequency/lowest frequency/highest frequency subcarrier is located;
the frequency determined by the antenna spacing, for example, taking an antenna array with a half-wavelength spacing: $d = \frac{{λ}_{0}}{2} = \frac{c}{2 {f}_{0}}$
as an example, the second frequency is: ${f}_{0} = \frac{c}{2 d} .$

In conjunction with the above example implementations, in some embodiments, the sensing reference signal is a wideband signal, and a narrowband subcarrier of a sensing reference signal port includes a first narrowband subcarrier and a second narrowband subcarrier. The compensated precoding vector of the first narrowband subcarrier is different from the precoding vector of the second narrowband subcarrier. There may be multiple first narrowband subcarriers. In some embodiments, the first narrowband subcarrier may correspond to the first frequency mentioned above, and the second narrowband subcarrier may correspond to the second frequency mentioned above. With beam phase compensation processing, the phase of elements in the precoding vector of the first narrowband subcarrier is compensated, while the phase of elements in the precoding vector of the second narrowband subcarrier is not compensated. Thus, the beam formed on the first narrowband subcarrier can be aligned with the beam formed on the second narrowband subcarrier. In some embodiments, the first narrowband subcarrier and the second narrowband subcarrier may be different subcarriers of an OFDM system, or they may be different bandwidth parts (BWPs).

For the linear frequency modulated (Chirp) signal, according to the embodiments of the present disclosure, different compensated precoding vectors may be obtained by performing different phase compensations respectively at different times and for different frequencies.

According to the above example implementations, for the first frequency of the sensing reference signal, the embodiments of the present disclosure obtain the phase rotation vector of the first frequency based on the normalized frequency coefficient of the first frequency relative to the second frequency (which may be understood as the reference frequency). Phase compensation is performed on the precoding vector based on the phase rotation vector of the first frequency. As can be seen from the above formula, the compensated precoding vector is a precoding vector that accurately points to the desired beam direction. Therefore, it can completely compensate for and overcome beam squint, strictly align beams at different frequencies, transmit narrow beams, and achieve high-precision sensing.

It is understood that the precoding vector shown in the above embodiments is only an example and does not constitute a limitation on the implementations of the precoding vector. For example, in some embodiments, the precoding vector may be other possible implementations.

In some embodiments, the names of information, etc., are not limited to those described in the embodiments. Terms such as "information", "message", "signal", "signaling", "report", "configuration", "indication", "instruction", "command", "parameter", "domain", "field", "notification", etc. are interchangeable.

In some embodiments, "acquire", "get", "obtain", "receive", "transmit", "bidirectional transmission", and "send and/or receive" are interchangeable, which may be interpreted as receiving from other entities, obtaining from protocols, obtaining from higher layers, obtaining through self-processing, autonomous implementations, etc.

In some embodiments, terms such as "send", "transmit", "report", "distribute", "transmit", "bidirectional transmission", "send and/or receive", etc. are interchangeable.

The beam transmission method involved in the embodiments of the present disclosure may include at least one of steps S3101 to S3102. For example, step S3101 may be implemented as a standalone embodiment, and step S3102 may be implemented as a standalone embodiment, but is not limited thereto.

Fig. 4A is a schematic flowchart of the beam transmission method shown according to an embodiment of the present disclosure. As shown in Fig. 4A, the embodiments of the present disclosure relate to a beam transmission method applied to a transmitter or an electronic device where the transmitter is located. The method includes steps S4101, S4102, and S4103.

**Step S4101**: receiving first information.

In some embodiments, the first information is used to determine whether to perform beam phase compensation processing.

Example implementations of step S4101 may be found in the example implementations of step S3101 in Fig. 3 and other related parts of the embodiment involved in Fig. 3, which will not be repeated here.

**Step S4102**: performing beam phase compensation processing on the sensing reference signal port based on the first information.

In some embodiments, performing beam phase compensation processing on the sensing reference signal port based on the first information may include, but is not limited to, at least one of the following implementations:
the first information indicates the first granularity of sensing, and beam phase compensation processing is performed on the sensing reference signal port;
the first information does not indicate the second granularity of sensing, and beam phase compensation processing is performed on the sensing reference signal port.

In some embodiments, performing beam phase compensation processing on the sensing reference signal port may include: performing beam phase compensation processing on at least one sensing reference signal port.

**Step S4103**: transmitting the sensing reference signal via beamforming.

In some embodiments, the beam phase compensation processing includes performing phase compensation on the precoding vector of the first frequency at the sensing reference signal port, and precoding the sensing reference signal according to the compensated precoding vector, then transmitting the sensing reference signal via beamforming.

Example implementations of steps S4102 and S4103 may be found in the example implementations of step S3102 in Fig. 3 and other related parts in the embodiment involved in Fig. 3, and will not be repeated here.

According to the above embodiments, the transmitter or the electronic device where the transmitter is located performs beam phase compensation processing on the sensing reference signal port based on the first information. The beam phase compensation processing can compensate for and overcome beam squint, achieving high-precision sensing of the refined granularity. In an example, for the sensing target with small cross-sectional areas or requiring further sensing, the first information may be used to perform beam phase compensation processing on the sensing reference signal port, thereby using the processed narrow beam for high-precision sensing of the refined granularity.

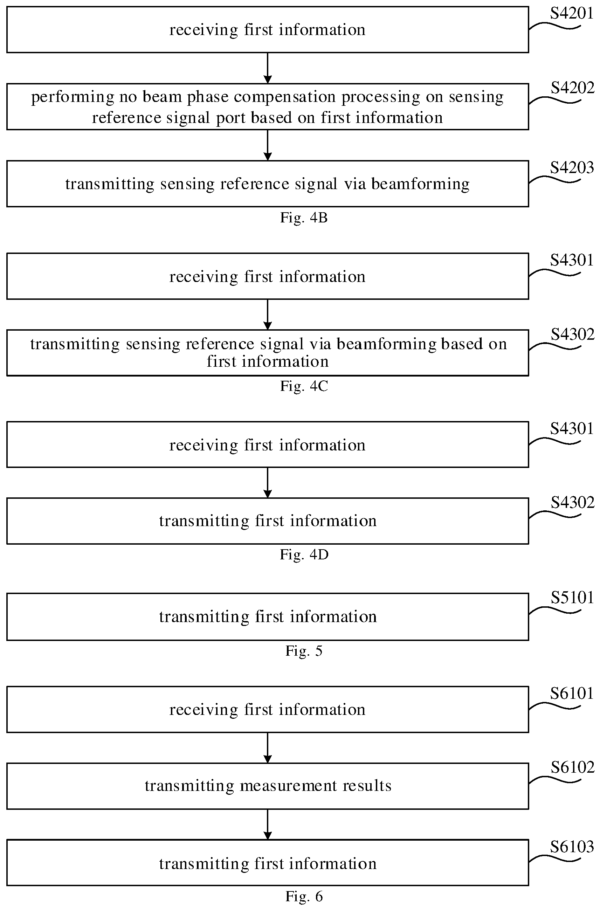

Fig. 4B is a schematic flowchart of a beam transmission method shown according to an embodiment of the present disclosure. As shown in Fig. 4B, the embodiments of the present disclosure relate to a beam transmission method, which is applied to a transmitter or an electronic device where the transmitter is located. The method includes steps S4201, S4202, and S4203.

**Step S4201**: receiving first information.

In some embodiments, the first information is used to determine whether to perform beam phase compensation processing.

Example implementations of step S4201 may refer to example implementations of step S3101 in Fig. 3 and step S4101 in Fig. 4A, and other related parts in the embodiments involved in Figs. 3 and 4A, which will not be repeated here.

**Step S4202**: based on the first information, no beam phase compensation processing is performed on the sensing reference signal port.

In some embodiments, not performing beam phase compensation processing on the sensing reference signal port based on the first information may include, but is not limited to, at least one of the following implementations:
the first information does not indicate the first granularity of sensing, and no beam phase compensation processing is performed on the sensing reference signal port;
the first information indicates the second granularity of sensing, and no beam phase compensation processing is performed on the sensing reference signal port.

In some embodiments, not performing beam phase compensation processing on the sensing reference signal port may include: not performing beam phase compensation processing on any of the sensing reference signal port(s).

**Step S4203**: the sensing reference signal is transmitted via beamforming.

In some embodiments, precoding is performed on the sensing reference signal according to the original precoding vector of the sensing reference signal port, thereby transmitting the sensing reference signal via beamforming.

Example implementations of steps S4202 and S4203 may be found in the example implementations of step S3102 in Fig. 3 and other related parts in the embodiments involved in Fig. 3, which will not be repeated here.

According to the above embodiments, the transmitter or the electronic device where the transmitter is located, based on the first information, does not perform beam phase compensation processing on the sensing reference signal port. Since the beam widened by beam squint can reduce the beam sweeping period and accelerate the beam sweeping process, rapid sensing of the coarse granularity can be achieved. In an example, for a sensing target with a large cross-sectional area, based on the first information, the wide beam due to squint is used to allow for lower-precision sensing of the coarse granularity, enabling rapid sensing.

Fig. 4C is a schematic flowchart of a beam transmission method shown according to an embodiment of the present disclosure. As shown in Fig. 4C, the embodiments of the present disclosure relate to a beam transmission method, which is applied to a transmitter or an electronic device where the transmitter is located. The method includes step S4301 and S4302.

**Step S4301**, receiving first information.

In some embodiments, the first information is used to determine whether to perform beam phase compensation processing.

Example implementations of step S4301 may be found in the example implementations of step S3101 in Fig. 3, step S4101 in Fig. 4A, and step S4201 in Fig. 4B, as well as other related parts in the embodiments involved in Figs. 3, 4A, and 4B, which will not be repeated here.

**Step S4302**: transmitting a sensing reference signal via beamforming based on the first information.

In some embodiments, the first information indicates the first granularity of sensing. The transmitter or the electronic device where the transmitter is located performs beam phase compensation processing on at least one sensing reference signal port and transmits the sensing reference signal via beamforming.

In some embodiments, the first information indicates the second granularity of sensing. The transmitter or the electronic device where the transmitter is located does not perform beam phase compensation processing on any sensing reference signal port and transmits the sensing reference signal via beamforming.

Example implementations of step S4302 may be found in the example implementations of step S3102 in Fig. 3, steps S4102 and S4103 in Fig. 4A, steps S4202 and S4203 in Fig. 4B, as well as other related parts in the embodiments involved in Figs. 3, 4A, and 4B, which will not be repeated here.

Fig. 4D is a schematic flowchart of a beam transmission method shown according to an embodiment of the present disclosure. As shown in Fig. 4D, the embodiments of the present disclosure relate to a beam transmission method, which is applied to a transmitter or an electronic device where the transmitter is located. The method includes step S4401 and S4402.

**Step S4401**: receiving first information.

Example implementations of step S4401 may be found in the example implementations of step S3101 in Fig. 3, step S4101 in Fig. 4A, step S4201 in Fig. 4B, and step S4301 in Fig. 4C, as well as other related parts in the embodiments involved in Figs. 3, 4A, 4B, and 4C, which will not be repeated here.

**Step S4402**: transmitting first information.

In some embodiments, the first information is transmitted to the electronic device where the receiver is located.

According to the above embodiments, the electronic device where the transmitter is located receives the first information sent by the network device and sends the first information to the electronic device where the receiver is located.

It is understood that the embodiments may be arbitrarily combined. For example, some or all steps of different embodiments may be arbitrarily combined. For example, the embodiment in Fig. 4D may be arbitrarily combined with some or all steps of the embodiment in Fig. 3, the embodiment in Fig. 4D may be arbitrarily combined with some or all steps of the embodiment in Fig. 4A, the embodiment in Fig. 4D may be arbitrarily combined with some or all steps of the embodiment in Fig. 4B, and the embodiment in Fig. 4D may be arbitrarily combined with some or all steps of the embodiment in Fig. 4C.

Fig. 5 is a schematic flowchart of an information transmission method shown according to an embodiment of the present disclosure. As shown in Fig. 5, the embodiments of the present disclosure relate to an information transmission method applied to a network device. The method includes step S5101.

**Step S5101**, transmitting first information.

In some embodiments, the first information is transmitted to an electronic device where a transmitter is located.

In some embodiments, the network device is, for example, an access network device or a core network device. In some embodiments, the network device includes a first network element. In some embodiments, the first network element is, for example, an LMF or an SMF. In some embodiments, the first network element may be used to transmit the first information to the electronic device where the transmitter is located, and/or to process the measurement results of the sensing reference signal by the electronic device where the receiver is located. The names thereof are not limited thereto.

In some embodiments, the first information is used to determine whether to perform beam phase compensation processing.

Example implementations of step S5101 may be found in the example implementations of step S3101 in Fig. 3, step S4101 in Fig. 4A, step S4201 in Fig. 4B, step S4301 in Fig. 4C, and step S4401 in Fig. 4D, as well as other related parts in the embodiments involved in Figs. 3, 4A, 4B, 4C, and 4D, which will not be repeated here.

It may be understood that the embodiments may be arbitrarily combined. For example, some or all steps of different embodiments may be arbitrarily combined. For instance, the embodiment in Fig. 5 may be arbitrarily combined with some or all steps of the embodiment in Fig. 3, the embodiment in Fig. 5 may be arbitrarily combined with some or all steps of the embodiment in Fig. 4A, the embodiment in Fig. 5 may be arbitrarily combined with some or all steps of the embodiment in Fig. 4B, the embodiment in Fig. 5 may be arbitrarily combined with some or all steps of the embodiment in Fig. 4C, and the embodiment in Fig. 5 may be arbitrarily combined with some or all steps of the embodiment in Fig. 4D.

Fig. 6 is a schematic flowchart of an information transmission method shown according to an embodiment of the present disclosure. As shown in Fig. 6, the embodiments of the present disclosure relate to an information transmission method, which is applied to a receiver or an electronic device where the receiver is located. The method includes steps S6101, S6102, and S6103.

**Step S6101**: receiving first information.

In some embodiments, the first information transmitted by the electronic device where the transmitter is located is received, but not limited to this. The first information transmitted by other entities may also be received.

Example implementations of step S6101 may be found in the example implementations of step S4402 in Fig. 4D and other related parts of the embodiment involved in Fig. 4D, which will not be repeated here.

**Step S6102**: transmitting measurement results.

In some embodiments, the measurement results are transmitted to a network device. In some embodiments, the network device is, for example, an access network device or a core network device. In some embodiments, the network device includes a first network element. In some embodiments, the first network element is, for example, an LMF or SMF. In some embodiments, the first network element may be used to transmit the first information to the electronic device where the transmitter is located, and/or to process the measurement results of the sensing reference signal by the electronic device where the receiver is located. The names thereof are not limited to these.

In some embodiments, the electronic device where the receiver is located measures the sensing reference signal and sends a measurement report to the first network element. The first network element calculates at least one of the following for each sensing target: distance, angle, speed, etc., and/or constructs a wireless sensing map, etc.

**Step S6103**: transmitting first information.

In some embodiments, first information is transmitted to the network device. The first information is used to associate with the measurement result.

In some embodiments, the first information is transmitted to the first network element.

According to the above embodiments, the electronic device where the receiver is located may send the measurement result and the associated first information to the first network element. Thus, the first network element, when processing the measurement result, can know whether the measurement result is based on the first granularity or the second granularity.

In some embodiments, steps S6101 and S6102 may be interchanged or executed simultaneously, and steps S6102 and S6103 may be interchanged or executed simultaneously.

In the embodiments of the present disclosure, some or all of the steps, and their example implementations, may be arbitrarily combined with some or all of the steps in other embodiments, and may also be arbitrarily combined with the example implementations of other embodiments.

According to the embodiments of the present disclosure, the LMF or SMF configures at least one granularity indicator (GI) for each sensing transmitter via signaling.

For example, the sensing transmitter notifies the sensing receiver of the GI via signaling.

For example, the aforementioned signaling includes, but is not limited to, DCI or RRC signaling.

For example, the GI may indicate at least two states, such as a first granularity (refined granularity) and a second granularity (coarse granularity).

The sensing transmitter transmits a corresponding sensing reference signal based on the received GI.

For example, when the received GI indicates the first granularity, the sensing transmitter performs predistortion processing on at least one port of the sensing reference signal. Predistortion can compensate for and overcome the beam squint problem, thereby enabling high-precision sensing of the refined granularity. Each port of the sensing reference signal may be referred to as a sensing reference signal port.

For example, when the received GI indicates the second granularity, the sensing transmitter does not perform predistortion processing on the sensing reference signal. Since the beam broadened by beam squint can reduce the beam sweeping period and accelerate the beam sweeping process, rapid sensing of the coarse granularity can be achieved.

For example, the predistortion described above may introduce a phase rotation into each element of the precoding vector corresponding to each sensing reference signal port.

For example, example implementations of the predistortion described above may be found in the descriptions above.

The embodiments of the present disclosure also propose an apparatus for implementing any of the above methods. For example, an apparatus is proposed that includes units or modules for implementing the steps performed by the electronic device where the transmitter is located in any of the above methods. As another example, another apparatus is proposed that includes units or modules for implementing the steps performed by the network device (e.g., core network functional node, core network device, etc.) in any of the above methods. As yet another example, yet another apparatus is proposed that includes units or modules for implementing the steps performed by the electronic device where the receiver is located in any of the above methods.

It should be understood that the division of units or modules in the above apparatus is only a logical functional division. In actual implementations, they may be fully or partially integrated into a single physical entity, or they may be physically separated. Furthermore, the units or modules in the device may be implemented in the form of a processor calling software. For example, the device includes a processor connected to a memory containing instructions. The processor calls the instructions stored in the memory to implement any of the above methods or to implement the functions of the units or modules of the device. The processor is, for example, a general-purpose processor, such as a Central Processing Unit (CPU) or a microprocessor, and the memory is either internal or external to the device. Alternatively, the units or modules in the device may be implemented in the form of hardware circuits. The functions of some or all of the units or modules may be implemented through the design of the hardware circuits, and the above hardware circuits may be understood as one or more processors. For example, in an implementation, the above hardware circuit is an application-specific integrated circuit (ASIC), and the functions of some or all of the units or modules above are implemented through the design of the logical relationships between the components within the circuit. As another example, in another implementation, the hardware circuit above may be implemented using a programmable logic device (PLD), such as a Field Programmable Gate Array (FPGA), which may include a large number of logic gates. The connection relationships between the logic gates are configured by a configuration file, thereby implementing the functions of some or all of the units or modules above. All the units or modules of the above-mentioned device may be implemented entirely through the processor-invoked software, entirely through the hardware circuit, or partially through the processor-invoked software with the remainder implemented through the hardware circuit.

In the embodiments of the present disclosure, the processor is a circuit with signal processing capabilities. In an implementation, the processor may be a circuit with instruction read and execute capabilities, such as a Central Processing Unit (CPU), a microprocessor, a graphics processing unit (GPU) (which may be understood as a microprocessor), a digital signal processor (DSP), etc. In another implementation, the processor may implement certain functions through the logical relationships of hardware circuits. The logical relationships of the above hardware circuits are fixed or reconfigurable. For example, the processor may be a hardware circuit implemented using an application-specific integrated circuit (ASIC) or a programmable logic device (PLD), such as an FPGA. In a reconfigurable hardware circuit, the process of the processor loading a configuration document and configuring the hardware circuit may be understood as the process of the processor loading instructions to implement the functions of some or all of the above-mentioned units or modules. In addition, it may also be hardware circuits designed for artificial intelligence, which may be understood as ASICs, such as Neural Network Processing Units (NPUs), Tensor Processing Units (TPUs), Deep Learning Processing Units (DPUs), etc.

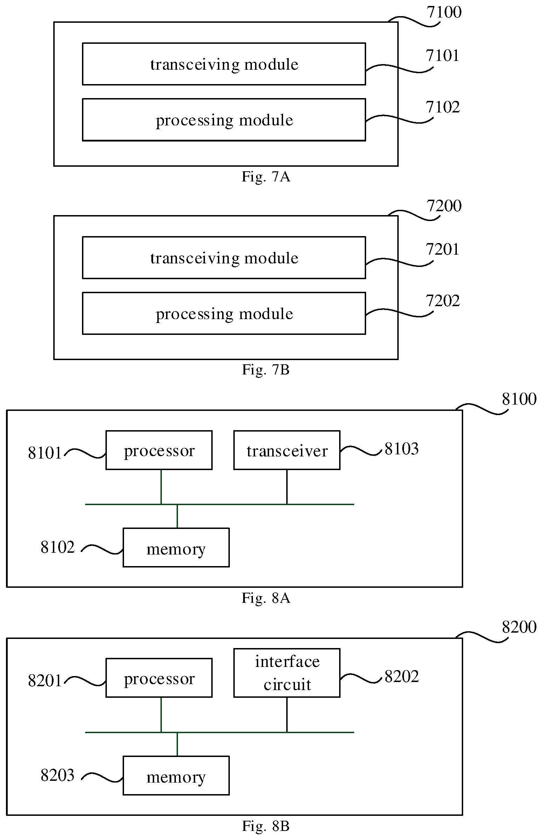

Fig. 7A is a schematic diagram of the structure of a sensing apparatus proposed in an embodiment of the present disclosure. As shown in Fig. 7A, the sensing apparatus 7100 may include at least one of a transceiving module 7101, a processing module 7102, etc. In some embodiments, the transceiving module above is used to receive first information. In some embodiments, the transceiving module above is used to transmit a sensing reference signal based on the first information via beamforming. For example, the transceiving module is used to perform at least one of the communication steps such as transmitting and/or receiving (e.g., S3102, but not limited thereto) performed by the electronic device where the transmitter is located in any of the above methods, which will not be elaborated here. For example, the processing module above is used to perform at least one of the other steps performed by the electronic device where the transmitter is located in any of the above methods, which will not be elaborated here.

Fig. 7B is a schematic diagram of the structure of a network device proposed in an embodiment of the present disclosure. As shown in Fig. 7B, the network device 7200 may include at least one of a transceiving module 7201, a processing module 7202, etc. In some embodiments, the transceiving module above is used to transmit first information. In some embodiments, the transceiving module is used to perform at least one of the communication steps such as transmitting and/or receiving (e.g., S3101, but not limited thereto) performed by the network device in any of the above methods, which will not be elaborated further here. For example, the processing module above is used to perform at least one of the other steps performed by the network device in any of the above methods, which will not be elaborated further here.

In some embodiments, the transceiving module may include a transmitting module and/or a receiving module, which may be separate or integrated together. For example, the transceiving module may be interchangeable with a transceiver.

In some embodiments, the processing module may be a single module or may include multiple sub-modules. For example, the above multiple sub-modules respectively perform all or some of the steps required by the processing module. For example, the processing module may be interchangeable with a processor.

Fig. 8A is a schematic structural diagram of a communication device 8100 proposed according to an embodiment of the present disclosure. The communication device 8100 may be a network device (e.g., access network device, core network device, etc.), a terminal (e.g., user device, etc.), a chip, chip system, or processor that supports the network device in implementing any of the above methods, or a chip, chip system, or processor that supports the terminal in implementing any of the above methods. The communication device 8100 may be used to implement the methods described in the above method embodiments. For details, references may be made to the descriptions in the above method embodiments.

As shown in Fig. 8A, the communication device 8100 includes one or more processors 8101. The processor 8101 may be a general-purpose processor or a dedicated processor, such as a baseband processor or a central processing unit (CPU). The baseband processor may be used to process communication protocols and communication data, and the central processor may be used to control communication devices (e.g., base stations, baseband chips, terminal devices, terminal device chips, distributed units (DUs) or centralized units (CUs), execute programs, and process program data. The communication device 8100 is used to perform any of the above methods.

In some embodiments, the communication device 8100 further includes one or more memories 8102 for storing instructions. For example, all or part of the memory 8102 may also be located outside the communication device 8100.

In some embodiments, the communication device 8100 further includes one or more transceivers 8103. When the communication device 8100 includes one or more transceivers 8103, the transceiver 8103 performs at least one of the communication steps such as transmitting and/or receiving (e.g., steps S3101, S3102, but not limited thereto) in the above-described methods, and the processor 8101 performs at least one of the other steps.

In some embodiments, the transceiver may include a receiver and/or a transmitter, which may be separate or integrated together. For example, the terms transceiver, transceiving unit, transceiving machine, transceiving circuit, etc., may be used interchangeably; the terms transmitter, transmitting unit, transmitting machine, transmitting circuit, etc., may be used interchangeably; and the terms receiver, receiving unit, receiving machine, receiving circuit, etc., may be used interchangeably.

In some embodiments, the communication device 8100 may include one or more interface circuits. For example, the interface circuit is connected to the memory 8102. The interface circuit may be used to receive signals from the memory 8102 or other devices, and may be used to send signals to the memory 8102 or other devices. For example, the interface circuit may read instructions stored in the memory 8102 and send the instructions to the processor 8101.

The communication device 8100 described in the above embodiments may be a network device or a terminal, but the scope of the communication device 8100 described in the present disclosure is not limited thereto, and the structure of the communication device 8100 is not limited to Fig. 8A. The communication device may be a standalone device or may be part of a larger device. For example, the communication device may be: (1) a standalone integrated circuit IC, or chip, or chip system or subsystem; (2) a collection of one or more ICs, for example, the above IC collection may also include a storage component for storing data and programs; (3) an ASIC, such as a modem; (4) a module that may be embedded in other devices; (5) a receiver, terminal device, smart terminal device, cellular phone, wireless device, handheld device, mobile unit, vehicle device, network device, cloud device, artificial intelligence device, etc.; (6) others, etc.

Fig. 8B is a schematic diagram of the structure of a chip 8200 proposed according to an embodiment of the present disclosure. For cases where the communication device 8100 may be a chip or a chip system, the schematic structural diagram of the chip 8200 shown in Fig. 8B may be referenced, but is not limited thereto.

The chip 8200 includes one or more processors 8201, and the chip 8200 is used to perform any of the methods described above.

In some embodiments, the chip 8200 further includes one or more interface circuits 8202. For example, the interface circuit 8202 is connected to the memory 8203, the interface circuit 8202 may be used to receive signals from the memory 8203 or other devices, and the interface circuit 8202 may be used to send signals to the memory 8203 or other devices. For example, the interface circuit 8202 may read instructions stored in the memory 8203 and send the instructions to the processor 8201.

In some embodiments, the interface circuit 8202 performs at least one of the communication steps such as transmitting and/or receiving (e.g., steps S3101, S3102, but not limited thereto) in the above-described method(s), while the processor 8201 performs at least one of the other steps.

In some embodiments, the terms interface circuit, interface, transceiving pin, transceiver, etc., may be used interchangeably.

In some embodiments, the chip 8200 further includes one or more memories 8203 for storing instructions. For example, all or some of the memories 8203 may be located outside the chip 8200.

The present disclosure also proposes a storage medium storing instructions. When the instructions are executed on the communication device 8100, the communication device 8100 is caused to perform any of the above methods. For example, the storage medium is an electronic storage medium. For example, the storage medium is a computer-readable storage medium, but not limited thereto. It may also be a storage medium readable by other devices. For example, the storage medium may be a non-transitory storage medium, but not limited thereto. It may also be a temporary storage medium.

The present disclosure also provides a program product. When the program product is executed by the communication device 8100, the communication device 8100 is caused to perform any of the above methods. For example, the program product is a computer program product.

The present disclosure also provides a computer program. When the computer program is run on a computer, the computer is caused to perform any of the above methods.

## Claims

1. A beam transmission method, comprising:
receiving first information, wherein the first information indicates a granularity of sensing; and
transmitting a sensing reference signal based on the first information via beamforming.

2. The method according to claim 1, wherein transmitting the sensing reference signal based on the first information via beamforming comprises:
performing beam phase compensation processing on a sensing reference signal port with the first information indicating a first granularity of sensing; and
transmitting the sensing reference signal via beamforming.

3. The method according to claim 1, wherein transmitting the sensing reference signal based on the first information via beamforming comprises:
performing no beam phase compensation processing on a sensing reference signal port with the first information indicating a second granularity of sensing; and
transmitting the sensing reference signal via beamforming.

4. The method according to claim 2 or 3, wherein the beam phase compensation processing comprises performing phase compensation on a precoding vector of a first frequency at the sensing reference signal port.

5. The method according to claim 4, wherein
the sensing reference signal is a broadband signal,
a narrowband subcarrier of the sensing reference signal port comprises a first narrowband subcarrier and a second narrowband subcarrier, and
a compensated precoding vector of the first narrowband subcarrier is different from the precoding vector of the second narrowband subcarrier.

6. The method according to claim 4, wherein
an antenna array for transmitting the sensing reference signal via beamforming is a uniform linear array,
an uncompensated precoding vector is: ${w}_{0} \left(θ\right) = \frac{1}{\sqrt{{N}_{t}}} \left[\begin{matrix}1 \\ {e}^{- j \frac{2 π}{{λ}_{0}} d cos θ} \\ ⋮ \\ {e}^{- j \frac{2 π}{{λ}_{0}} nd cos θ} \\ ⋮ \\ {e}^{- j \frac{2 π}{{λ}_{0}} \left({N}_{t}-1\right) d cos θ}\end{matrix}\right] ,$ a phase rotation vector of the first frequency is: ${w}_{Δ} \left(r, θ\right) = \left[\begin{matrix}1 \\ {e}^{- j \frac{2 π}{{λ}_{0}} \left(r-1\right) d cos θ} \\ ⋮ \\ {e}^{- j \frac{2 π}{{λ}_{0}} n \left(r-1\right) d cos θ} \\ ⋮ \\ {e}^{- j \frac{2 π}{{λ}_{0}} \left({N}_{t}-1\right) \left(r-1\right) d cos θ}\end{matrix}\right] ,$ and
the compensated precoding vector is a vector obtained by multiplying the uncompensated precoding vector with respective elements of the phase rotation vector of the first frequency,
where d is an antenna spacing of the antenna array, Θ is a target direction of a beam corresponding to the sensing reference signal port, λ₀ is a first wavelength, *λ*₀ *= c*/*f*₀, *f*₀ is a second frequency, c is a speed of light, *Nt is* a number of antenna ports contained in the antenna array, j is an imaginary unit, e is a natural constant, and *r* is a normalized frequency coefficient of the first frequency relative to the second frequency.

7. The method according to claim 4, wherein
an antenna array for transmitting the sensing reference signal via beamforming is a uniform linear array,
the uncompensated precoding vector is represented as: ${w}_{0} = {\sum }_{i = 0}^{{N}_{t} - 1} {c}_{i} {v}_{0 , i} ,$
a phase rotation vector of v_{0,*i*} of the first frequency is: ${v}_{Δ , i} \left(r\right) = \left[\begin{matrix}1 \\ {e}^{- j \frac{2 π}{{N}_{t}} \left(r-1\right) i} \\ ⋮ \\ {e}^{- j \frac{2 π}{{N}_{t}} n \left(r-1\right) i} \\ ⋮ \\ {e}^{- j \frac{2 π}{{N}_{t}} \left({N}_{t}-1\right) \left(r-1\right) i}\end{matrix}\right] ,$ the compensated precoding vector is represented as: ${w}_{r} = {\sum }_{i = 0}^{{N}_{t} - 1} {c}_{i} {v}_{r , i} ,$ and
v*_{r,i}* is a vector obtained by multiplying v_{0,*i*} with respective elements of v_{Δ,*i*}(*r*),
where v_{0,*i*} is an i-th column vector of a discrete Fourier transform (DFT) matrix of a dimension *Nₜ, Cᵢ* is a weighting coefficient corresponding to v_{0,*i*}, *Nₜ* is a number of antenna ports contained in the antenna array, *j* is an imaginary unit, e is a natural constant, and *r* is a normalized frequency coefficient of the first frequency relative to the second frequency.

8. The method according to claim 4, wherein
an antenna array for transmitting the sensing reference signal via beamforming is a uniform area array, and the compensated precoding vector is a Kronecker product of a compensated precoding vector in a horizontal dimension and a compensated precoding vector in a vertical dimension;
the compensated precoding vector in the horizontal dimension is a vector obtained by multiplying an uncompensated precoding vector in the horizontal dimension with respective elements of a first phase rotation vector, wherein the first phase rotation vector is a phase rotation vector of the first frequency in the horizontal dimension; and
the compensated precoding vector in the vertical dimension is a vector obtained by multiplying an uncompensated precoding vector in the vertical dimension with respective elements of a second phase rotation vector, wherein the second phase rotation vector is a phase rotation vector of the first frequency in the vertical dimension.

9. The method according to claim 8, wherein the uncompensated precoding vector in the horizontal dimension is: ${w}_{0}^{\left(h\right)} \left(θ\right) = \frac{1}{\sqrt{{N}_{t}^{\left(h\right)}}} \left[\begin{matrix}1 \\ {e}^{- j \frac{2 π}{{λ}_{0}} {d}^{\left(h\right)} cos θ} \\ ⋮ \\ {e}^{- j \frac{2 π}{{λ}_{0}} {nd}^{\left(h\right)} cos θ} \\ ⋮ \\ {e}^{- j \frac{2 π}{{λ}_{0}} \left({N}_{t}^{\left(h\right)}-1\right) {d}^{\left(h\right)} cos θ}\end{matrix}\right] ,$ the phase rotation vector of the first frequency in the horizontal dimension is: ${w}_{Δ}^{\left(h\right)} \left(r, θ\right) = \left[\begin{matrix}1 \\ {e}^{- j \frac{2 π}{{λ}_{0}} \left(r-1\right) {d}^{\left(h\right)} cos θ} \\ ⋮ \\ {e}^{- j \frac{2 π}{{λ}_{0}} n \left(r-1\right) {d}^{\left(h\right)} cos θ} \\ ⋮ \\ {e}^{- j \frac{2 π}{{λ}_{0}} \left({N}_{t}^{\left(h\right)}-1\right) \left(r-1\right) {d}^{\left(h\right)} cos θ}\end{matrix}\right] ,$ the uncompensated precoding vector in the vertical dimension is: ${w}_{0}^{\left(v\right)} \left(ϕ\right) = \frac{1}{\sqrt{{N}_{t}^{\left(v\right)}}} \left[\begin{matrix}1 \\ {e}^{- j \frac{2 π}{{λ}_{0}} {d}^{\left(v\right)} cos ϕ} \\ ⋮ \\ {e}^{- j \frac{2 π}{{λ}_{0}} {nd}^{\left(v\right)} cos ϕ} \\ ⋮ \\ {e}^{- j \frac{2 π}{{λ}_{0}} \left({N}_{t}^{\left(v\right)}-1\right) {d}^{\left(v\right)} cos ϕ}\end{matrix}\right] ,$ and
the phase rotation vector of the first frequency in the vertical dimension is: ${w}_{Δ}^{\left(v\right)} \left(r, ϕ\right) = \left[\begin{matrix}1 \\ {e}^{- j \frac{2 π}{{λ}_{0}} \left(r-1\right) {d}^{\left(v\right)} cos ϕ} \\ ⋯ \\ {e}^{- j \frac{2 π}{{λ}_{0}} n \left(r-1\right) {d}^{\left(v\right)} cos ϕ} \\ ⋯ \\ {e}^{- j \frac{2 π}{{λ}_{0}} \left({N}_{t}^{\left(v\right)}-1\right) \left(r-1\right) {d}^{\left(v\right)} cos ϕ}\end{matrix}\right] ,$ where *d*^{(*h*)} is an antenna spacing of the antenna array in the horizontal dimension, *d*^{(*v*)} is an antenna spacing of the antenna array in the vertical dimension, *θ* is a target direction of a beam corresponding to the sensing reference signal port in the horizontal dimension, *ϕ* is a target direction of the beam corresponding to the sensing reference signal port in the vertical dimension, *λ*₀ is a first wavelength, *λ*₀ *= c*/*f*₀, *f*₀ is a second frequency, c is a speed of light, *Nₜ*^{(*h*)} is a number of antenna ports contained in the antenna array in the horizontal dimension, *Nₜ*^{(*h*)} is a number of antenna ports contained in the antenna array in the vertical dimension, j is an imaginary unit, e is a natural constant, and *r* is a normalized frequency coefficient of the first frequency relative to the second frequency.

10. An information transmission method, performed by a core network element and comprising:
transmitting first information, wherein the first information indicates a granularity of sensing.

11. A beam transmission method, comprising:
transmitting, by a core network element, first information to an electronic device where a transmitter is located, wherein the first information indicates a granularity of sensing; and
transmitting, by the electronic device where the transmitter is located, a sensing reference signal based on the first information via beamforming.

12. A sensing apparatus, comprising a transceiving module configured to:
receive first information, wherein the first information indicates a granularity of sensing; and
transmit a sensing reference signal based on the first information via beamforming.

13. A network device, comprising:
a transceiving module configured to transmit first information, wherein the first information indicates a granularity of sensing.

14. A sensing device, comprising one or more processors, wherein the sensing device is configured to perform the beam transmission method according to any one of claims 1-9.

15. A network device, comprising one or more processors, wherein the network device is configured to perform the information transmission method according to claim 10.

16. A sensing system, comprising a transmitter and a receiver, wherein the transmitter is configured to implement the beam transmission method according to any one of claims 1-9.

17. A storage medium having instructions stored thereon, wherein when the instructions are executed on a communication device, the communication device is caused to perform the beam transmission method according to any one of claims 1-9 or to perform the information transmission method according to claim 10.
